# FASCICULE DE BREVET EUROPEEN

(11) **EP 2 616 253 B1**
(45) Date de publication et mention de la délivrance du brevet: **19.11.2014**
(21) Numéro de dépôt: 11761650.8
(22) Date de dépôt: 09.09.2011
(51) Int. Cl.: B60B 33/00

(54) **ROULETTE POUR MEUBLE OU ANALOGUE AVEC MOYENS DE BLOCAGE**
ROLLE FÜR MÖBEL ODER DERGLEICHEN MIT VERRIEGELUNGSVORRICHTUNG
CASTER FOR FURNITURE OR THE LIKE, WITH LOCKING MEANS

(30) Priorité: 13.09.2010 FR 1003639
(43) Date de publication de la demande: 24.07.2013
(73) Titulaire: Tente Roulettes Polymeres - Bruandet, 39700 La Barre (FR)
(72) Inventeur: DAYT, Patrick, F-25000 Besançon (FR)
(74) Mandataire: Flavenot, Bernard
(86) Numéro de dépôt international: PCT/FR2011/000496
(87) Numéro de publication internationale: WO 2012/035213

(56) Documents cités:
- EP-A1- 0 650 854
- EP-A2- 1 527 906
- FR-A1- 2 895 702
- GB-A- 2 240 471

## Description

La présente invention concerne les roulettes destinées à être associées à tout objet du type meuble pour faciliter son déplacement, qui comportent essentiellement deux roues, un carter destiné à supporter et protéger les roues et un pivot qui assure la liaison entre le carter et le meuble.

Nombre de telles roulettes trouvent une application particulièrement avantageuse pour aider au déplacement, notamment mais non exclusivement, du matériel et du mobilier hospitaliers, par exemple les tables roulantes, fauteuils, chariots, déambulateurs, etc.. De telles roulettes sont par exemple décrites dans le EP 0650854 et le GB 2240471.

La structure d'une telle roulette doit donc être conçue de façon qu'elle permette de déplacer facilement ces meubles dans toutes les directions. En particulier, elle comporte généralement deux roues montées parallèles, des moyens pour permettre à ces deux roues de tourner autour d'un axe horizontal par rapport au carter dans le but de rouler sur le sol pour assurer le déplacement du meuble en translation rectiligne, ainsi que des moyens pour que le carter puisse pivoter autour d'un axe sensiblement vertical par rapport au meuble pour permettre à la roulette de prendre toutes directions par rapport au meuble et donc pour pouvoir facilement diriger ce meuble en suivant des courbes.

Cependant, par exemple lorsque le meuble est arrivé en fin de déplacement dans sa position définitive, il est généralement nécessaire de l'empêcher de se déplacer, ne serait-ce qu'accidentellement. Il est donc préférable que les roulettes montées sur ce meuble soient alors automatiquement bloquées au moins en roulement pour l'empêcher de rouler sur le sol, plus particulièrement dans le cas des tables, déambulateurs, etc., mais que leur déblocage ne soit obtenu qu'à la suite d'une manoeuvre volontaire de l'utilisateur.

La présente invention a pour but de réaliser une roulette qui tente de répondre aux buts mentionnés ci-dessus et présente une structure avec un nombre minimal de pièces pouvant être réalisées de façon industrielle puis facilement assemblées pour obtenir la roulette sous sa forme définitive, afin de lui conférer un coût de revient le plus faible possible.

Plus précisément, la présente invention a pour objet une roulette comprenant notamment les caractéristiques énoncées dans la revendication 1 annexée.

D'autres caractéristiques et avantages de l'invention apparaîtront au cours de la description suivante donnée en regard des dessins annexés à titre illustratif mais nullement limitatif, dans lesquels :
Les figures 1 à 4 représentent différentes vues d'un mode de réalisation de la roulette selon l'invention, à savoir :
   - les figures 1 et 2 qui sont des vues latérales de la roulette avec l'une des deux roues enlevée, montrant la roulette dans ses deux états, respectivement non-bloquée et bloquée,
   - la figure 3 qui est une vue en perspective de la roulette, avec également l'une des deux roues enlevée, visant à faire ressortir ses caractéristiques structurelles, et
   - la figure 4 qui est une vue arrière de la roulette avec ses deux roues.

La présente invention concerne une roulette du type à blocage-déblocage qui se bloque automatiquement sans une manoeuvre particulière et qui ne peut être débloquée que si elle est soumise à une action extérieure volontaire.

La roulette selon l'invention comprend un carter 10, de type connu, par exemple d'une forme comme celle qui est représentée sur les figures, au moins deux roues 11, 12 aptes à prendre contact avec une surface donnée Sd, et des moyens pour monter ces deux roues en rotation par rapport au carter sur un arbre 14 lié au carter et défini selon un premier axe 15 sensiblement parallèle à la surface Sd quand la roulette roule sur cette surface.

De plus, le montage en rotation des roues 11, 12 sur le carter 10 est réalisé de façon qu'au moins une partie 10' du carter soit située entre les deux roues.

La roulette comporte aussi un pivot 20 défini selon un deuxième axe 21. Ce pivot permet de lier la roulette, par exemple, à l'extrémité d'un montant du meuble sur lequel doit être montée la roulette, comme un matériel ou un mobilier hospitalier, par exemple une table, un déambulateur, etc..

Ce pivot 20 est monté en coopération avec le carter 10 de façon que le deuxième axe 21 soit à la fois sensiblement orthogonal au premier axe 15, situé à une distance non nulle de ce premier axe 15, et contenu dans un premier plan 22 parallèle aux deux plans passant respectivement par les deux roues 11, 12 et situé entre ces deux plans.

Ce pivot peut être fixe par rapport au carter 10, et dans ce cas il est constitué d'une patte ou analogue, ou monté rotatif par rapport au carter, et dans ce cas la roulette comporte des moyens pour monter ce pivot en rotation par rapport au carter 10 selon le deuxième axe 21. Ces moyens sont connus en eux-mêmes et peuvent avantageusement comporter essentiellement des moyens de roulement du type "à billes", "à aiguilles", ou analogue.

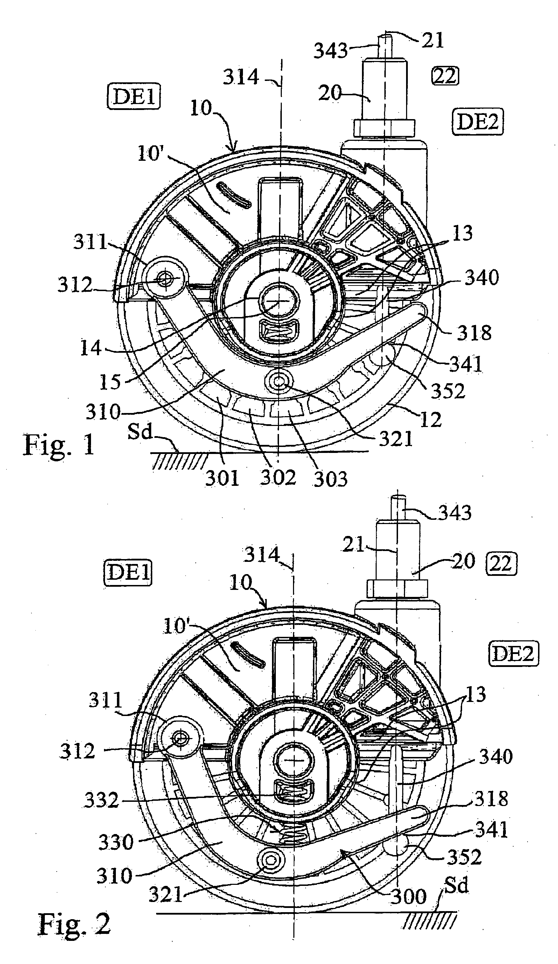

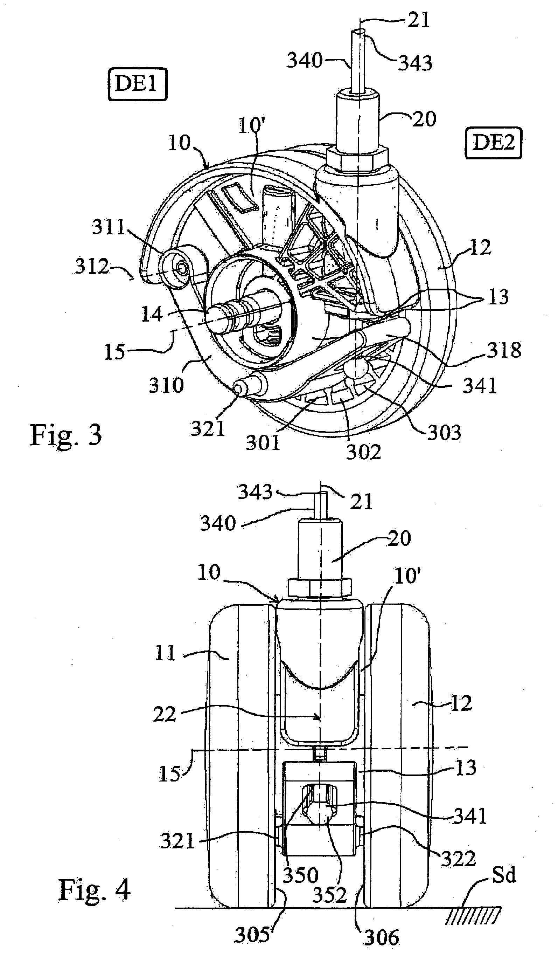

La roulette comporte des moyens de blocage-déblocage 300 des deux roues 11, 12 par rapport au carter. Selon une caractéristique de l'invention, ces moyens de blocage-déblocage comportent deux ensembles de crans femelles 301, 302, 303, ..., plus particulièrement visibles sur les figures 1 et 3, réalisés respectivement sur les deux faces 305, 306 des roues 11, 12 qui sont tournées vers la partie 10' du carter 10 située entre ces roues. De façon très préférentielle, les crans sont réalisés sur tout le pourtour des faces en regard des deux roues pour assurer de façon certaine le blocage de la roulette comme explicité ci-après, quelle que soit la position angulaire de la roulette dans sa rotation par rapport au carter.

Ces moyens de blocage-déblocage 300 comportent en outre un levier 310 monté rotatif par rapport au carter 10 par une première 311 de ses extrémités autour d'un troisième axe 312 sensiblement parallèle au premier axe 15, ce troisième axe 312 étant situé dans le demi-espace DE1 délimité par le deuxième plan 314 contenant le premier axe 15 et sensiblement perpendiculaire à la surface donnée Sd, et ne contenant pas le pivot 20, c'est-à-dire le demi-espace opposé au demi-espace DE2, figures 1 à 3. Il est à noter que la figure 4 représente la roulette selon le mode de réalisation illustré sur les figures 1 à 3, dans une vue arrière depuis ce demi-espace DE2. En outre, le levier 310 est monté rotatif par rapport au carter 10 de façon à rester constamment situé entre le premier axe 15 et la surface donnée Sd.

Sont aussi prévus deux ergots mâles 321, 322 solidaires du levier 310, complémentaires des crans femelles 301, 302, 303, ... respectivement des deux ensembles de crans femelles.

Le levier 310 est en outre monté rotatif par rapport au carter 10 de façon qu'il soit apte à prendre au moins deux positions, une première position, figures 1, 3 et 4, dans laquelle les deux ergots 321, 322 ne coopèrent avec aucun des crans femelles 301, 302, 303, ..., et une seconde position, figure 2, dans laquelle les deux ergots 321, 322 sont positionnés dans deux crans femelles respectivement des deux ensembles de crans femelles.

Pour que la roulette soit automatiquement bloquée sans manoeuvre particulière, comme défini ci-avant, les moyens de blocage-déblocage 300 comportent en outre des moyens élastiques 330 pour tendre à amener constamment le levier 310 dans sa seconde position.

Pour que la roulette soit débloquée par une action extérieure volontaire, il est prévu un lien de traction 340 et des moyens, dont un mode de réalisation est décrit ci-après, pour lier une première extrémité 341 du lien de traction 340 sensiblement à la seconde extrémité 318 du levier 310 opposée à sa première extrémité 311, pour commander le passage du levier de sa seconde à sa première position.

Selon une réalisation préférentielle comme celle illustrée sur les figures, la distance séparant les deux extrémités opposées 311, 318 du levier 310, quelle que soit la forme de ce dernier, est choisie supérieure à la distance séparant le troisième axe 312 et le premier axe 15. De façon encore plus préférentielle, la distance séparant les deux extrémités opposées 311, 318 du levier 310 est choisie sensiblement égale à la distance séparant le troisième axe 312 et le deuxième axe 21.

De façon avantageuse, notamment sur le plan de la réalisation de la roulette, les moyens élastiques 330 pour tendre à amener le levier dans sa seconde position sont constitués par un ressort de poussée 332, de type hélicoïdal ou analogue, dont les deux extrémités sont situées en appui respectivement sur le carter 10 et sur le levier 310. De façon plus préférentielle, les deux extrémités de ce ressort de poussée 332 sont sensiblement situées dans le deuxième plan 314 défini ci-avant.

En outre, pour éviter au levier 310 de devoir une trop grande rotation autour du troisième axe 312 en passant de sa première à sa seconde position et réciproquement, le levier 310 présente avantageusement, comme illustré sur les figures, une forme courbe sensiblement en "virgule" de façon que sa partie concave soit en regard de l'arbre 14.

Selon une réalisation avantageuse, le lien de traction 340 est monté coulissant dans une percée longitudinale réalisée dans le pivot 20, figures 1 à 4, l'axe de cette percée longitudinale étant sensiblement défini selon le deuxième axe 21 du pivot 20. Il est en plus préférable et avantageux, pour une facilité de réalisation, que ce lien de traction 340 soit un lien souple, par exemple un câble de frein de bicyclette.

Quant aux moyens pour lier la première extrémité 341 de ce lien de traction 340 sensiblement à la seconde extrémité 318 du levier 310, il sont avantageusement constitués d'une percée traversante 350 réalisée dans cette seconde extrémité 318 du levier 310, la percée traversante ayant une section supérieure à celle du lien de traction souple 340, et d'une tête 352 solidaire de la première extrémité 341 du lien de traction 340, cette tête 352 ayant une section supérieure à celle de la percée traversante 350.

Ainsi, le lien souple 340 est passé dans la percée traversante 350 et dans la percée longitudinale du pivot 20 de façon que la tête 352 vienne en butée contre le bord de la percée traversante 350, dont le bord forme épaulement pour la tête 352.

La seconde extrémité 343 du lien de traction 340 est alors apte à être soumise à une traction dans le but de débloquer les roues 11, 12 en faisant sortir les ergots 321, 322 hors des crans femelles 301, 302, 303, ..., par passage du levier 310, à l'encontre de l'effort exercé par les moyens élastiques 330, de sa seconde à sa première position.

Selon une réalisation préférée, comme celle qui est illustrée sur les figures, la partie 10' du carter qui est située entre les deux roues 11, 12 a sensiblement la forme d'une paroi de forme générale plane ou sensiblement plane. Le levier 310 est alors monté rotatif par rapport au carter 10 sensiblement dans le plan de cette partie de carter 10' en forme de paroi, entre la surface donnée Sd et le bord 13 de cette partie de carter qui est sensiblement en regard de la surface donnée Sd. De façon avantageusement, dans ce cas, la première extrémité 311 du levier 310 a la forme d'une fourche dans laquelle plonge cette partie de carter 10', l'axe de rotation 312 traversant les deux branches de la fourche et la partie de carter.

La roulette selon l'invention fonctionne de la façon suivante :

Il est par exemple supposé que la roulette est montée sur un montant d'un déambulateur formé, de façon classique, d'un assemblage de montants, tubes, etc. La roulette est fixée à une extrémité d'un des montants, via le pivot 20, avec le lien de traction 340 passé à l'intérieur du montant (éventuellement, si nécessaire, dans une gaine comme celle pour un frein de bicyclette) et débouchant, par son extrémité émergente 343, par exemple à côté d'une poignée de guidage du déambulateur qui doit être serrée par l'utilisateur lorsqu'il se déplace avec ce déambulateur. L'extrémité émergente 343 du lien de traction est montée en coopération avec, par exemple, une poignée du type "poignée de frein", comme celles qui se trouvent sur les guidons des bicyclettes.

Quand le déambulateur n'est pas utilisé, le ressort 332 agit sur le levier 310 pour qu'il prenne sa seconde position, figure 2, avec les deux ergots 321, 322 logés dans deux crans respectivement des deux ensembles de crans 301, 302, 303, ... et empêchant les roues 11, 12 de rouler sur la surface du sol Sd. Le déambulateur est donc fixe par rapport au sol Sd et l'utilisateur potentiel peut même s'appuyer sur lui en relative sécurité, sans craindre que ce déambulateur ne se déplace accidentellement.

Par contre, s'il veut se déplacer avec l'aide du déambulateur, par un acte volontaire et réfléchi de sa part, il agit sur la poignée de frein, par exemple en la serrant en même temps que la poignée de guidage, ce qui a pour effet d'exercer une traction sur le lien de traction, et donc de faire passer le levier 310 de sa seconde position (figure 2) à sa première position (figure 1), c'est-à-dire de faire sortir les ergots 321, 322 des crans femelles et de permettre aux roues 11, 12 de rouler sur le sol.

Si l'utilisateur veut par exemple se reposer, il lui suffit de relâcher la poignée de frein pour permettre au levier 310 de reprendre sa seconde position dans laquelle, comme décrit ci-dessus, les roues 11, 12 sont bloquées, et donc d'empêcher à nouveau le déambulateur de se déplacer sur le sol Sd.

La roulette pourra être montée de la même façon sur un pied de table roulante, un pied de matériel hospitalier, etc., ou en association avec tout autre type de meuble, et fonctionnera comme décrit ci-dessus.

## Revendications

1. Roulette à blocage comprenant :
- un carter (10),
- au moins deux roues (11, 12) aptes à prendre contact avec une surface donnée (Sd),
- des moyens pour monter les deux dites roues en rotation par rapport au carter sur un arbre (14) défini selon un premier axe (15) sensiblement parallèle à ladite surface (Sd), de façon qu'au moins une partie (10') du dit carter soit située entre les deux dites roues,
- un pivot (20) défini selon un deuxième axe (21), ledit pivot étant monté en coopération avec ledit carter (10) de façon que ledit deuxième axe (21) soit à la fois sensiblement orthogonal au premier axe (15), situé à une distance non nulle de ce dit premier axe (15) et contenu dans un premier plan (22) parallèle aux deux plans passant respectivement par les deux roues (11, 12) et situé entre ces deux plans, et
- des moyens de blocage-déblocage (300) des deux roues (11, 12) par rapport au carter,
lesdits moyens de blocage-déblocage (300) comportent :
• deux ensembles de crans femelles (301, 302, 303, ...) réalisés respectivement sur les deux faces (305, 306) des dites roues (11, 12) qui sont tournées vers ladite partie (10') du carter (10),
**caractérisée par** un levier (310) monté rotatif par rapport au dit carter (10) par une première (311) de ses extrémités autour d'un troisième axe (312) sensiblement parallèle au premier axe (15), ce dit troisième axe (312) étant situé dans le demi-espace (DE1) délimité par le deuxième plan (314) contenant ledit premier axe (15) et sensiblement perpendiculaire à ladite surface donnée (Sd), et ne contenant pas ledit pivot (20), ledit levier étant monté rotatif par rapport au dit carter de façon à rester constamment situé entre le premier axe (15) et ladite surface donnée (Sd),
• deux ergots mâles (321, 322) solidaires du dit levier (310), ces deux ergots étant complémentaires des crans femelles respectivement des deux ensembles de crans femelles, ledit levier (310) étant en outre monté rotatif par rapport au carter (10) de façon qu'il soit apte à prendre au moins deux positions, une première position dans laquelle les deux ergots (321, 322) ne coopèrent avec aucun des crans femelles (301, 302, 303, ...) et une seconde position dans laquelle les deux ergots (321, 322) sont positionnés dans deux crans femelles respectivement des deux ensembles de crans femelles,
• des moyens élastiques (330) pour tendre à amener constamment ledit levier (310) dans sa seconde position,
• un lien de traction (340), et
• des moyens pour lier une première extrémité (341) du dit lien de traction (340) sensiblement à la seconde extrémité (318) du levier (310) opposée à sa première extrémité (311), pour commander le passage du dit levier de sa seconde à sa première position.

2. Roulette selon la revendication 1, **caractérisée par le fait que** la distance séparant les deux extrémités opposées (311, 318) du dit levier (310) est supérieure à la distance séparant le troisième axe (312) et le premier axe (15).

3. Roulette selon la revendication 1, **caractérisée par le fait que** la distance séparant les deux extrémités opposées (311, 318) du dit levier (310) est sensiblement égale à la distance séparant le troisième axe (312) et le deuxième axe (21).

4. Roulette selon l'une des revendications 1 à 3, **caractérisée par le fait que** les moyens élastiques (330) pour tendre à amener le levier dans sa seconde position sont constitués par un ressort de poussée (332) dont les deux extrémités sont situées en appui respectivement sur ledit carter (10) et sur ledit levier (310).

5. Roulette selon les revendications 2 et 4, **caractérisée par le fait que** les deux extrémités du ressort de poussée (332) sont sensiblement situées dans ledit deuxième plan (314).

6. Roulette selon l'une des revendications précédentes, **caractérisée par le fait que** ledit levier (310) présente une forme courbe sensiblement en "virgule" de façon que sa partie concave soit en regard du dit arbre (14).

7. Roulette selon l'une des revendications précédentes, **caractérisée par le fait que** ledit lien de traction (340) est monté coulissant dans une percée longitudinale réalisée dans ledit pivot, l'axe de cette dite percée longitudinale étant sensiblement défini selon ledit deuxième axe (21).

8. Roulette selon la revendication 7, **caractérisée par le fait que** ledit lien de traction (340) est un lien souple.

9. Roulette selon la revendication 8, **caractérisée par le fait que** les moyens pour lier la première extrémité (341) de ce dit lien de traction (340) sensiblement à la seconde extrémité (318) du levier (310) sont constitués d'une percée traversante (350) réalisée dans cette seconde extrémité (318) du levier (310), ladite percée traversante ayant une section supérieure à celle du lien (340) souple, et d'une tête (352) solidaire de la première extrémité (341) du lien de traction (340), cette tête (352) ayant une section supérieure à celle de la dite percée traversante (350), ledit lien souple (340) étant passé dans cette percée traversante (350) et dans la percée longitudinale du dit pivot (20) de façon que ladite tête (352) vienne en butée contre le bord de la percée traversante (350), ledit bord formant épaulement pour ladite tête (352), la seconde extrémité (343) du lien de traction (340) étant apte à être soumise à une traction dans le but de débloquer lesdites roues (11, 12) en faisant sortir lesdits ergots (321, 322) hors des crans femelles (301, 302, 303, ...), par passage du dit levier (310), à l'encontre de l'effort exercé par les moyens élastiques (330), de sa seconde à sa première position.

10. Roulette selon l'une des revendications précédentes, **caractérisée par le fait que** ladite partie (10') du dit carter située entre les deux dites roues a sensiblement la forme d'une paroi, ledit levier (310) étant monté rotatif par rapport au dit carter (10) sensiblement dans le plan de ladite partie de carter (10') en forme de paroi, entre ladite surface donnée (Sd) et le bord (13) de cette dite partie de carter (10') qui est sensiblement en regard de la surface donnée (Sd).

11. Roulette selon l'une des revendications précédentes, **caractérisée par le fait qu'**elle comporte en outre des moyens pour monter ledit pivot (20) en rotation par rapport au carter (10) selon le deuxième axe (21).

## Patentansprüche

1. Feststellrolle, die umfasst:
- ein Gehäuse (10),
- wenigstens zwei Räder (11, 12), die mit einer gegebenen Oberfläche (Sd) einen Kontakt herstellen können,
- Mittel, um die beiden Räder drehbar in Bezug auf das Gehäuse an einer Welle (14) zu montieren, die längs einer ersten Achse (15) definiert ist, die zu der Oberfläche (Sd) im Wesentlichen parallel ist, derart, dass sich wenigstens ein Teil (10') des Gehäuses zwischen den beiden Rädern befindet,
- einen Drehzapfen (20), der längs einer zweiten Achse (21) definiert ist, wobei der Drehzapfen in Zusammenwirkung mit dem Gehäuse (10) montiert ist, derart, dass die zweite Achse (21) sowohl im Wesentlichen senkrecht zu der ersten Achse (15) ist als auch sich in einem von null verschiedenen Abstand von dieser ersten Achse (15) befindet und in einer ersten Ebene (22) enthalten ist, die zu den zwei Ebenen parallel ist, die jeweils durch eines der beiden Räder (11,12) verlaufen und sich zwischen diesen beiden Ebenen befindet und
- Mittel zum Feststellen/Lösen (300) der zwei Räder (11, 12) in Bezug auf das Gehäuse,
wobei die Feststell-/Lösemittel (300) umfassen:
- zwei Anordnungen von Kerben (301, 302, 303, ...), die jeweils auf einer der beiden Flächen (305, 306) der Räder (11, 12), die zu dem Teil (10') des Gehäuses (10) gewendet sind, verwirklicht sind,
**gekennzeichnet durch** einen Hebel (310), der drehbar in Bezug auf das Gehäuse (10) über ein erstes (311) seiner Enden um eine zu der ersten Achse (15) im Wesentlichen parallele dritte Achse (312) montiert ist, wobei sich diese dritte Achse (312) in dem Halbraum (DE1) befindet, der **durch** die zweite Ebene (314) begrenzt ist, die die erste Achse (15) enthält und zu der gegebenen Oberfläche (Sd) im Wesentlichen senkrecht ist und den Drehzapfen (20) nicht enthält, wobei der Hebel drehbar in Bezug auf das Gehäuse montiert ist, derart, dass er stets zwischen der ersten Achse (15) und der gegebenen Oberfläche (Sd) verbleibt,
- zwei Nasen (321, 322), die mit dem Hebel (310) fest verbunden sind, wobei diese zwei Nasen zu den entsprechenden Kerben der zwei Anordnungen von Kerben komplementär sind, wobei der Hebel (310) außerdem drehbar in Bezug auf das Gehäuse (10) montiert ist, derart, dass er wenigstens zwei Positionen einnehmen kann, eine erste Position, in der die zwei Nasen (321, 322) mit keiner der Kerben (301, 302, 303, ...) zusammenwirken, und einer zweiten Position, in der die beiden Nasen (321, 322) in zwei entsprechenden Kerben der zwei Anordnungen von Kerben positioniert sind,
- elastische Mittel (330), die bestrebt sind, den Hebel (310) stets in seine zweite Position zu führen,
- ein Zugverbindungsglied (340) und
- Mittel zum Verbinden eines ersten Endes (341) des Zugverbindungsglieds (340) im Wesentlichen mit dem zweiten Ende (318) des Hebels (310) gegenüber seinem ersten Ende (311), um den Übergang des Hebels von seiner zweiten in seine erste Position zu steuern.

2. Rolle nach Anspruch 1, **dadurch gekennzeichnet, dass** der Abstand, der die beiden gegenüberliegenden Enden (311, 318) des Hebels (310) trennt, größer ist als der Abstand, der die dritte Achse (312) und die erste Achse (15) trennt.

3. Rolle nach Anspruch 1, **dadurch gekennzeichnet, dass** der Abstand, der die zwei gegenüberliegenden Enden (311, 318) des Hebels (310) trennt, im Wesentlichen gleich dem Abstand ist, der die dritte Achse (312) und die zweite Achse (21) trennt.

4. Rolle nach einem der Ansprüche 1 bis 3, **dadurch gekennzeichnet, dass** die elastischen Mittel (330), die bestrebt sind, den Hebel in seine zweite Position zu führen, durch eine Druckfeder (332) gebildet sind, deren zwei Enden so angeordnet sind, dass sie sich auf dem Kasten (10) bzw. auf dem Hebel (310) abstützen.

5. Rolle nach den Ansprüchen 2 und 4, **dadurch gekennzeichnet, dass** sich die zwei Enden der Druckfeder (332) im Wesentlichen in der zweiten Ebene (314) befinden.

6. Rolle nach einem der vorhergehenden Ansprüche, **dadurch gekennzeichnet, dass** der Hebel (310) eine Form aufweist, die im Wesentlichen wie ein "Komma" gekrümmt ist, derart, dass sich sein konkaver Teil gegenüber der Welle (14) befindet.

7. Rolle nach einem der vorhergehenden Ansprüche, **dadurch gekennzeichnet, dass** das Zugverbindungsglied (340) gleitend in einem Langloch montiert ist, das in dem Drehzapfen ausgebildet ist, wobei die Achse dieses Langlochs im Wesentlichen längs der zweiten Achse (21) definiert ist.

8. Rolle nach Anspruch 7, **dadurch gekennzeichnet, dass** das Zugverbindungselement (340) ein elastisches Verbindungselement ist.

9. Rolle nach Anspruch 8, **dadurch gekennzeichnet, dass** die Mittel zum Verbinden des ersten Endes (341) dieses Zugverbindungselements (340) im Wesentlichen mit dem zweiten Ende (318) des Hebels (310) aus einem Durchgangsloch (350), das in diesem zweiten Ende (318) des Hebels (310) verwirklicht ist, wobei das Durchgangsloch einen Querschnitt besitzt, der größer als jener des elastischen Verbindungsglieds (340) ist, und aus einem Kopf (352), der mit dem ersten Ende (341) des Verbindungselements (340) fest verbunden ist, wobei dieser Kopf (352) einen Querschnitt besitzt, der größer als jener des Durchgangslochs (350) ist, gebildet sind, wobei das elastische Verbindungsglied (340) in dieses Durchgangsloch (350) und in das Langloch des Drehzapfens (20) geführt ist, derart, dass der Kopf (352) an dem Rand des Durchgangslochs (350) anliegt, wobei der Rand eine Schulter für den Kopf (352) bildet, wobei das zweite Ende (343) des Zugverbindungselements (340) einem Zug unterworfen werden kann, um die Feststellung der Räder (11, 12) zu lösen, indem die Nasen (321, 322) so veranlasst werden, die Kerben (301, 302, 303, ...) zu verlassen, indem der Hebel (310) entgegen der durch die elastischen Mittel (330) ausgeübten Kraft von seiner zweiten in seine erste Position übergeht.

10. Rolle nach einem der vorhergehenden Ansprüche, **dadurch gekennzeichnet, dass** der Teil (10') des Gehäuses, der sich zwischen den zwei Rädern befindet, im Wesentlichen die Form einer Wand hat, wobei der Hebel (310) drehbar in Bezug auf das Gehäuse (10) im Wesentlichen in der Ebene des Teils des Gehäuses (10') in Form einer Wand zwischen der gegebenen Oberfläche (Sd) und dem Rand (13) dieses Teils des Gehäuses (10'), der sich im Wesentlichen gegenüber der gegebenen Oberfläche (Sd) befindet, montiert ist.

11. Rolle nach einem der vorhergehenden Ansprüche, **dadurch gekennzeichnet, dass** sie außerdem Mittel umfasst, um den Drehzapfen (20) drehbar in Bezug auf das Gehäuse (10) um die zweite Achse (21) zu montieren.

## Claims

1. A lockable caster comprising:
· a casing (10);
· at least two wheels (11, 12) suitable for coming into contact with a given surface (Sd);
· means for mounting said two wheels to rotate relative to the casing on a shaft (14) defined along a first axis (15) that is substantially parallel to said surface (Sd) so that at least a portion (10') of said casing is situated between said two wheels;
· a swivel (20) defined along a second axis (21), said swivel being mounted to co-operate with said casing (10) in such a manner that said second axis (21) is simultaneously substantially orthogonal to the first axis (15), is situated at a non-zero distance from said first axis (15), and is contained in a first plane (22) parallel to two planes passing respectively via the two wheels (11, 12) and situated between these two planes; and
· locking/unlocking means (300) for locking and unlocking the two wheels (11, 12) relative to the casing, said locking/unlocking means (300) comprising two sets of female catches (301, 302, 303, ...) formed respectively in the two faces (305, 306) of said wheels (11, 12) that face towards said portion (10') of the casing (10);
the caster being **characterized by**:
· a lever (310) pivotally mounted relative to said casing (10) at a first one (311) of its ends to pivot about a third axis (312) substantially parallel to the first axis (15), said third axis (312) being situated in the half-space (DE1) defined by the second plane (314) containing said first axis (15) and substantially perpendicular to said given surface (Sd), and not containing said swivel (20), said lever being pivotally mounted relative to said casing so as to remain constantly situated between the first axis (15) and said given surface (Sd);
· two male studs (321, 322) secured to said lever (310), the two studs being complementary to the female catches respectively in the two sets of female catches, said lever (310) also being mounted to pivot relative to the casing (10) in such a manner as to be capable of occupying at least two positions, a first position in which the two studs (321, 322) do not co-operate with any of the female catches (301, 302, 303, ...), and a second position in which the two studs (321, 322) are positioned in two respective female catches of the two sets of female catches;
· resilient means (330) constantly tending to bring said lever (310) into its second position;
· a traction link (340); and
· means for linking a first end (341) of said traction link (340) substantially to the second end (318) of the lever (310) remote from its first end (311), in order to cause said lever to pass from its said second position to its said first position.

2. A caster according to claim 1, **characterized by** the fact that the distance between the two opposite ends (311, 318) of said lever (310) is greater than the distance between the third axis (312) and the first axis (15).

3. A caster according to claim 1, **characterized by** the fact that the distance between the two opposite ends (311, 318) of said lever (310) is substantially equal to the distance between the third axis (312) and the second axis (21).

4. A caster according to any one of claims 1 to 3, **characterized by** the fact that the resilient means (330) tending to bring the lever into its second position are constituted by a thrust spring (332) having its two ends bearing respectively against said casing (10) and against said lever (310).

5. A caster according to claim 2 and claim 4, **characterized by** the fact that the two ends of the thrust spring (332) are situated substantially in said second plane (314).

6. A caster according to any preceding claim, **characterized by** the fact that said lever (310) presents a substantially comma-shaped curved shape so that its concave portion faces said shaft (14).

7. A caster according to any preceding claim, **characterized by** the fact that said traction link (340) is slidably mounted in a longitudinal hole formed in said swivel, the axis of said longitudinal hole being substantially defined along said second axis (21).

8. A caster according to claim 7, **characterized by** the fact that said traction link (340) is a flexible tie.

9. A caster according to claim 8, **characterized by** the fact that the means for linking the first end (341) of said traction link (340) substantially to the second end (318) of the lever (310) are constituted by a through hole (350) formed in said second end (318) of the lever (310), said through hole having a section greater than the section of the flexible tie (340), and a head (352) secured to the first end (341) of the traction link (340), said head (352) having a section greater than the section of said through hole (350), said flexible tie (340) being passed through said through hole (350) and along the longitudinal hole of said swivel (20) so that said head (352) comes into abutment against the edge of the through hole (350), said edge forming a shoulder for said head (352), the second end (343) of the traction link (340) being suitable for being subjected to traction for the purpose of unlocking said wheels (11, 12) by causing said studs (321, 322) to move out from the female catches (301, 302, 303, ...) by causing said lever (310) to move against the force exerted by the resilient means (330) so as to pass from its second position to its first position.

10. A caster according to any preceding claim, **characterized by** the fact that said portion (10') of said casing situated between said two wheels is substantially in the shape of a wall, said lever (310) being pivotally mounted relative to said casing (10) substantially in the plane of said wall-forming casing portion (10'), between said given surface (Sd) and the edge (13) of said casing portion (10') that substantially faces the given surface (Sd).

11. A caster according to any preceding claim, **characterized by** the fact that it further includes means for mounting said swivel (20) to pivot relative to the casing (10) about the second axis (21).
